# EUROPÄISCHE PATENTANMELDUNG

(11) **EP 2 687 769 A1**
(43) Veröffentlichungstag der Anmeldung: **22.01.2014**
(21) Anmeldenummer: 12007060.2
(22) Anmeldetag: 11.10.2012
(51) Int. Cl.: F16N 39/00

(54) **Einrichtung mit Schmierstoffschutzanordnung und Schmierverfahren**

(30) Priorität: 19.07.2012 DE 102012014390
(71) Anmelder: Linde Aktiengesellschaft, 80331 Munich (DE)
(72) Erfinder: Foret, Pierre, 80796 München (DE)
(74) Vertreter: Gellner, Bernd

(57) **Zusammenfassung**

Die vorliegende Erfindung betrifft eine Einrichtung (10) mit wenigstens zwei zu schmierenden Reibpartnern (11, 12) und wenigstens einem in der Einrichtung angeordneten Schmiermittelreservoir (14) für ein Schmiermittel, mit wenigstens einer Schmiermittelschutzanordnung, die Mitteln (15, 16) zum Beaufschlagen des Schmiermittels in dem Schmiermittelreservoir (14) sowie der Einrichtung (10) mit einem Schmiermittelschutzgas aufweist, wobei eine Druckbeaufschlagungseinrichtung zur Druckbeaufschlagung des Schmiermittelreservoirs (14) und/oder eines Reibpaaraufnahmebereiches (18) der Einrichtung (10), in dem die Reibpartner vorgesehen sind.

## Beschreibung

Die vorliegende Erfindung betrifft eine zu schmierende Einrichtung mit einer Schmiermittelschutzanordnung sowie ein entsprechendes Schmierverfahren.

### Stand der Technik

Die Schmierung von Maschinenelementen mit Schmiermitteln wie Fetten, Ölen oder Festschmierstoffen erfüllt unterschiedliche Aufgaben. Sie dient einerseits der Verhinderung oder Reduzierung von Verschleißerscheinungen an Kontaktstellen von sogenannten Reibpartnern, einem Abbau von Spannungsspitzen sowie, beispielsweise in Wälzlagern, der Verringerung zusätzlicher Reibungsschubspannungen an Oberflächen. Darüber hinaus kommen Schmiermittel als Korrosionsschutz zum Einsatz und werden, sofern ein ausreichender Schmiermittelaustausch und damit eine Abfuhr von Wärme gewährleistet werden kann, zur Kühlung von Maschinenelementen verwendet.

Ziel der Schmierung ist es, einander kontaktierende Oberflächen der Reibpartner durch einen hydrodynamischen Flüssigkeitsfilm oder eine schützende Reaktionsschicht zu trennen. Bei der hydrodynamischen Schmierfilmbildung spielen häufig auch elastische Verformungen eine Rolle, so dass auch von einer sogenannten elastohydrodynamischen Schmierung gesprochen wird. Bei der Schmierung wird eine vollständige Trennung der Reibpartner angestrebt. Diese lässt sich durch eine geeignete Kombination der Schmiermittelviskosität, der Bewegungsgeschwindigkeit der Reibpartner und deren Kontaktdruck, aber auch durch konstruktive Anpassungen erreichen.

Wie erwähnt, sind als Schmiermittel Schmieröle, Schmierfette und Festschmierstoffe bekannt. Im Rahmen dieser Anmeldung liegt das Hauptaugenmerk dabei auf flüssigen Schmiermitteln wie z. B. Schmierölen. Wichtige beeinflussbare Kenngrößen von Schmierölen sind die Dichte, der Viskositätsindex, die Scherstabilität, der sogenannte Cloud-and-Pour-Point, das Neutralisationsvermögen, die Neutralisationszahl, die Gesamtbasenzahl und der Flammpunkt. Ferner beeinflussen die Wärmekapazität, die Luftaufnahmekapazität sowie der Gehalt an Wasser und Fremdstoffen die Eigenschaften eines Schmieröls.

Zur Modifikation tribologisch relevanter Schmieröleigenschaften, beispielsweise des Viskositäts-/Temperatur- und/oder des Reibungs- und Verschleißverhaltens, jedoch auch zur Erhöhung der Oxidationsbeständigkeit oder der Verhinderung der Schaumbildung sind unterschiedlichste Schmieröladditive bekannt.

Additive können dabei in Form kommerziell erhältlicher sogenannter Additivpakete einem Schmieröl beigegeben werden. In modernen Motorenölen liegen 10 bis 20 % des Gesamtvolumens in Form von Additiven vor. Einen zusätzlichen Anteil, typischerweise etwa 3 %, stellen Polymerzusätze dar.

Die Lebensdauer von Schmierölen ist begrenzt. Aufgrund von Interaktionen mit dem zu schmierenden System und der umgebenden Atmosphäre kann die Lebensdauer des Schmieröls und auch jene des tribologischen Systems insgesamt beträchtlich reduziert werden. Als besonders kritisch sind dabei Oxidationsvorgänge anzusehen, die zu einer Erhöhung des Säurewerts und damit zu einer erhöhten Korrosivität des Schmieröls führen. Eine Zunahme der Viskosität bewirkt sich über die Zeit ändernde tribologische Eigenschaften des Systems. Ablagerungen, die aufgrund von Korrosion durch sich abscheidende Schmierölkomponenten entstehen, können Blockaden verursachen. Ein Verlust von Additiven kann dazu führen, dass bestimmte Bestandteile des Schmieröls nicht mehr ausreichend geschützt sind, wodurch dieses an Qualität verliert. Damit sind häufige Ölwechsel bzw. Wartungsintervalle erforderlich.

Es ist daher wünschenswert, die Lebensdauer eines Schmieröls, allgemeiner eines flüssigen Schmiermittels, insbesondere eines mineralölbasierten Schmieröls, zu erhöhen.

### Offenbarung der Erfindung

Vor diesem Hintergrund stellt die vorliegende Erfindung eine zu schmierende Einrichtung mit einer Schmiermittelschutzanordnung sowie ein entsprechendes Schmierverfahren mit den Merkmalen der unabhängigen Patentansprüche bereit.

Bevorzugte Ausgestaltungen sind Gegenstand der jeweiligen Unteransprüche sowie der nachfolgenden Beschreibung.

### Vorteile der Erfindung

Die Erfindung schlägt eine Einrichtung mit wenigstens zwei zu schmierenden Reibpartnern und zumindest einem in der Einrichtung angeordneten Schmiermittelreservoir für ein Schmiermittel vor, bei der zumindest eine Schmiermittelschutzanordnung vorgesehen ist, die Mittel zum Versorgen des Schmiermittels in dem Schmiermittelreservoir mit einem Schmiermittelschutzgas aufweist.

Mittels der erfindungsgemäß vorgesehenen steuerbaren Druckbeaufschlagung des Schmiermittels in dem Schmiermittelreservoir und/oder einem Reibpartneraufnahmebereich ist es möglich, je nach Bedarf im Schmiermittel vorhandenes Schmiermittelschutzgas zu lösen, oder auch in den gasförmigen Zustand zu überführen. Somit ist eine wesentlich effektivere Versorgung des Schmiermittels mit Schmiermittelschutzgas im Vergleich zu herkömmlichen Lösungen zur Verfügung gestellt. Es ist beispielsweise möglich, chargenweise eine große Menge Schmiermittelschutzgas in das Schmiermittel einzubringen, und durch entsprechende Druckbeaufschlagung dafür zu sorgen, dass zunächst nur ein Teil dieses Schmiermittelschutzgases im gasförmigen Zustand vorliegt. Beispielsweise nach entsprechendem (unvermeidlichen) Entweichen von gasförmigem Schmiermittelschutzgas aus dem System ist es dann in einfacher Weise durch Druckerniedrigung möglich, weiteres, bisher gelöstes Schmiermittelschutzgas in den gasförmigen Zustand zu überführen.

Es ist besonders bevorzugt, dass die erfindungsgemäß vorgesehene Druckbeaufschlagungseinrichtung einen Kolben aufweist, wobei das Volumen des Schmiermittelreservoirs und/oder des Reibpartneraufnahmebereiches mittels Bewegung des Kolbens zur Erhöhung oder Erniedrigung des herrschenden Druckes verkleinerbar bzw. vergrößerbar ist. Ein derartiger Mechanismus stellt eine besonders einfache und robuste Möglichkeit dar, um herrschende Drücke zu steuern. Der Kolben wird zweckmäßigerweise von einer Steuereinrichtung angetrieben.

Zweckmäßigerweise ist in dem Schmiermittelreservoir und/oder dem Reibpartneraufnahmebereich wenigstens ein Temperatursensor und/oder wenigstens ein Drucksensor ausgebildet. Auf der Grundlage entsprechend erhaltener Messwerte kann eine Bewegung des Kolbens mittels der Steuereinrichtung zur Steuerung des herrschenden Druckes wirksam und effektiv durchgeführt werden.

Das Schmiermittelreservoir und auch die Einrichtung selbst können zusätzlich zum Durchströmen mit einem, insbesondere demselben Schmiermittelschutzgas eingerichtet sein. Hierdurch kann kontinuierlich oder intermittierend eine geeignete Schmiermittelatmosphäre, z.B. in Form eines sauerstofffreien Aerosols, in der zu schmierenden Einrichtung bereitgestellt oder erneuert werden.

Ist im Rahmen dieser Anmeldung von einem "Schmiermittelschutzgas" die Rede, sei darunter ein Gas verstanden, das aufgrund seiner physikalischen und/oder chemischen Eigenschaften, z. B. aufgrund seiner Inertheit, eine verlängerte Schmiermittellenbensdauer und/oder verbesserte Schmiermitteleigenschaften bewirkt. Vorzugsweise umfasst ein derartiges Schmiermittelschutzgas Inertgase wie beispielsweise Stickstoff und Kohlendioxid und/oder Edelgase wie Argon. Aber auch Gase wie Kohlenmonoxid oder Acetylen sind geeignet. Ein Schmiermittelschutzgas ist vorteilhafterweise sauerstofffrei, um eine Oxidation von Schmiermittelbestandteilen zu vermeiden. Vorzugsweise ist das Schmiermittelschutzgas auch frei von anderen korrosiven Bestandteilen, insbesondere frei von Wasser und reibenden Partikeln.

Wenn im Rahmen der vorliegenden Anmeldung von einem "sauerstofffreien" Schmiermittelschutzgas die Rede ist, sei darunter auch ein Gas verstanden, das noch geringe (Rest-)Gehalte an gelöstem Sauerstoff aufweist oder zur Sauerstoffbildung in geringem Umfang in der Lage ist. Eine vollständige Sauerstofffreiheit ist zwar wünschenswert, jedoch in der Regel mit beträchtlichen Mehrkosten verbunden.

Verfahren zur Entfernung von Sauerstoff, beispielsweise aus entsprechenden Gasen, sind hinlänglich bekannt. Beispielsweise kann Sauerstoff aus Luft in einer Kältefalle auskondensiert oder katalytisch abgeschieden werden. Inertgase wie Argon, Stickstoff oder Kohlendioxid können auch in flüssiger, sauerstofffreier Form bereitgestellt und vor der Verwendung in einem Schmiermittelschutzgas in die Gasphase überführt werden.

Durch die erfindungsgemäßen Maßnahmen wird es ermöglicht, in einer zu schmierenden Einrichtung ein sauerstofffreies Schmiermittel-/Gassystem zu schaffen, das dort dauerhaft bereitsteht und die Lebensdauer reibender Komponenten signifikant verlängert. Die Wartungsintervalle entsprechender Anlagen können damit deutlich vergrößert werden, was zu einer höheren Verfügbarkeit und/oder zu geringeren Wartungskosten führt. Aufgrund einer entsprechenden sauerstofffreien Schmiermittelatmosphäre können auch sauerstoffempfindliche Schmiermitteladditive verwendet werden, ohne dass ein häufiger Schmiermittelwechsel erfolgen müsste.

Als besonders vorteilhaft wird eine Schmierstoffschutzanordnung angesehen, die neben einer Zuleitung für das Schmiermittelschutzgas Mittel zum Einperlen des Schmiermittelschutzgases in das Schmiermittel aufweist. Hierbei kann es sich beispielsweise um eine Gaseinperleinrichtung handeln, die es ermöglicht, Gasbläschen zu erzeugen, die das Schmiermittel durchströmen und beim Durchströmen des Schmiermittels ein Aerosol und/oder einen Schmiermittelnebel erzeugen. Die Gasbläschen können beispielsweise durch ein Filter (Membran oder Fritte) erzeugt werden, wobei die Gasbläschengröße durch die jeweilige Porengröße beeinflusst wird.

Wenn im Rahmen dieser Erfindung von einem "Aerosol" die Rede ist, sei darunter jedes System verstanden, in dem ein flüssiges Schmiermittel in einem gasförmigen Trägerfluid, z.B. in Form von Tröpfchen, vorliegt. Die jeweilige Tröpfchengröße kann dabei sehr unterschiedlich sein und im Bereich zwischen 0,5 nm und mehreren 10 µm liegen.

Vorteilhafterweise weist die zu schmierende Einrichtung Auslassöffnungen für das Schmiermittelschutzgas auf. Das entweichende Schmiermittelschutzgas kann dann beispielsweise einer Reinigung (z.B. durch Filtration oder chemische Aufbereitung) unterworfen und/oder einer Schmierstoffschutzanordnung erneut zugeführt werden. Verbrauchtes Schmiermittelschutzgas kann hierdurch effektiv abgeführt werden.

Vorteilhaft kann auch sein, eine Schmierstoffschutzanordnung bereitzustellen, die eine Heizeinrichtung für das Schmiermittel und/oder das Schmiermittelschutzgas aufweist. Wie allgemein bekannt, weisen bestimmte erwärmte Gase, beispielsweise Acetylen oder Kohlenmonoxid, die als Schmiermittelschutzgas verwendet werden können, einen positiven Einfluss auf die tribologischen Eigenschaften eines zu schmierenden Systems auf. Es kann daher vorgesehen sein, mittels einer Gasheizung einen entsprechend erwärmten Gasstrom bereitzustellen. Durch entsprechende Heizeinrichtungen wird eine besonders gute Steuerbarkeit von Parametern des Schmiermittels und/oder des Schmiermittelschutzgases, beispielsweise seiner Dichte, seiner Viskosität und/oder seiner Komprimierbarkeit gewährleistet.

Bei einer erhöhten Temperatur in einer Schmierstoffschutzanordnung kann gegebenenfalls auch erst eine gewisse Menge an Schmiermittel in die Gasphase gebracht und dadurch ein Aerosol erzeugt werden. Trifft ein derartiges erwärmtes Aerosol auf (kühlere) Getriebeelemente, werden flüssige Aerosolpartikel an diesen durch Kondensation abgeschieden, so dass eine zielgerichtete Schmierung erreicht werden kann.

Ein erfindungsgemäßes Verfahren zum Schmieren umfasst das Beaufschlagen eines Schmiermittelreservoirs und des darin enthaltenen Schmiermittels und der Einrichtung selbst mit einem Schmiermittelschutzgas unter Verwendung der erläuterten Schmiermittelschutzanordnung.

Vorteilhafterweise können in einem entsprechenden Verfahren, wie erwähnt, als Schmiermittelschutzgase Inertgase wie Argon oder Stickstoff, aber auch Gase wie Kohlendioxid, Kohlenmonoxid und/oder Acetylen verwendet werden, von denen bekannt ist, dass sie die tribologischen Eigenschaften eines zu schmierenden Systems positiv beeinflussen. Entsprechende Gasmischungen können ebenfalls Verwendung finden.

Als Schmiermittel wird vorzugsweise ein mineralölbasiertes Schmiermittel, insbesondere ein Mineralöl mit Polymerzusätzen und/oder Additiven verwendet. Wie bereits zuvor erläutert, können aufgrund des verbesserten Schutzes des Schmiermittels durch die erfindungsgemäßen Maßnahmen auch Polymerzusätze verwendet werden, die in herkömmlichen Schmiersystemen nicht zum Einsatz kommen könnten, weil sie der schädlichen Oxidationswirkung des Sauerstoffs ausgesetzt wären. Insbesondere kann durch den Einsatz der Erfindung jedoch auf bestimmte Additive wie z. B. Antioxidantien verzichtet werden, wodurch bedeutende Kostenvorteile erzielt werden.

Wie bereits erwähnt, kann in einem entsprechenden Verfahren eine Viskosität, eine Dichte und/oder eine Komprimierbarkeit des Schmiermittels und/oder des Schmiermittelschutzgases eingestellt werden. Dies kann beispielsweise durch eine geeignete Gaszusammensetzung und -temperatur und/oder eine geeignete Strömungsgeschwindigkeit oder durch entsprechend eingestellte Drücke erfolgen.

Das erfindungsgemäße Verfahren lässt sich bei einer Reihe von zu schmierenden Einrichtungen wie beispielsweise Turbinen von Windkraftanlagen, Motorenteilen, Lagern, Ventilen und Ventilantrieben und schneidenden Werkzeugen einsetzen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

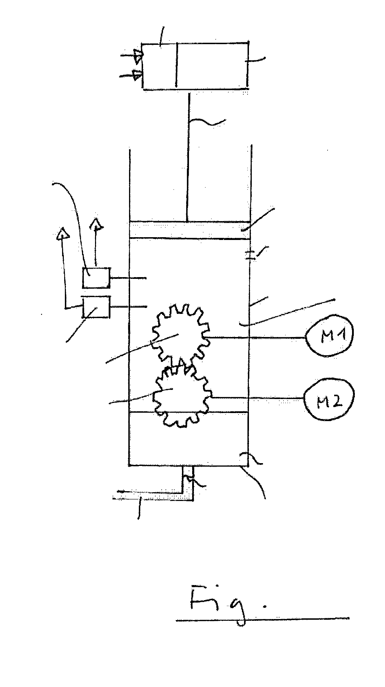

- Figur 1: zeigt eine Einrichtung gemäß einer besonders bevorzugten Ausführungsform der Erfindung.

In Figur 1 ist eine Einrichtung gemäß einer besonders bevorzugten Ausführungsform der Erfindung dargestellt und insgesamt mit 10 bezeichnet. Die Einrichtung 10 umfasst wenigstens zwei Reibpartner 11, 12, die als Zahnräder symbolisiert und durch Motoren M1 und M2 angetrieben sind. Die Reibpartner 11, 12 sind in einem Gehäuse 13 untergebracht, das gasdichte Wandungen aufweist und derart ausgebildet ist, dass ein einströmendes Schmiermittelschutzgas in kontrollierter Menge in das Gehäuse 13 eingebracht und gehalten werden kann.

Die Einrichtung 10 weist ein Schmiermittelreservoir 14, beispielsweise in Form eines für eine Tauchschmierung bereitgestellten Schmiermittelsumpfs, auf, das am Boden 13a des Gehäuses 13 ausgebildet ist. Generell können die Reibpartner 11, 12 vom Schmiermittelreservoir 14 zum Teil oder vollständig umgeben sein. Bodenseitig des Schmiermittelreservoirs 14 ist eine Einperleinrichtung 15 zum Einperlen eines Schmiermittelschutzgases in das Schmiermittel in dem Schmiermittelreservoir 14 vorgesehen. Das Schmiermittelschutzgas wird über Zuleitungen 16 zugeführt. Die Einperleinrichtung 15 umfasst vorzugsweise eine Membran und/oder eine Fritte, mittels derer Gasbläschen in dem Schmiermittelreservoir erzeugt werden können. Hierdurch wird eine besonders große Kontaktfläche zwischen dem Schmiermittel und dem Schmiermittelschutzgas erzeugt.

Der Bereich, in dem die Reibpartner 11, 12 vorgesehen sind, wird im Folgenden als Reibpartneraufnahmebereich 18 bezeichnet. Man erkennt in Figur 1, dass dieser Reibpartneraufnahmebereich 18 begrenzt wird durch das Gehäuse 13, den Boden 13a des Gebäudes 13 des Schmiermittelreservoirs 14 und einen Kolben 20. Der Kolben 20 ist mittels eines Antriebs 22 (z. B. gesteuert durch ein Steuergerät 22a) in Richtung seiner Kolbenachse 21 hin- und her verschiebbar (durch Pfeile angedeutet). Der Reibpartneraufnahmebereich ist bevorzugt zylinderartig ausgebildet. Durch eine derartige Verschiebung des Kolbens 20 lässt sich somit das Volumen des Reibpartneraufnahmebereichs 18 verkleinern oder vergrößern, womit der in dem Reibpartneraufnahmebereich herrschende Druck entsprechend erhöht oder erniedrigt werden kann. Kolben 20 und Antrieb 22 stellen somit Komponenten einer insgesamt mit 24 bezeichneten Druckbeaufschlagungseinrichtung im Sinne der vorliegenden Erfindung dar.

Mittels einer somit in einfacher Weise bereitstellbaren Druckerhöhung (durch Antreiben bzw. Hinabdrücken des Kolbens 20) ist es z.B. möglich, im Schmiermittel in gasförmiger Phase vorliegendes Schmiermittelschutzgas zu lösen. Umgekehrt kann durch umgekehrtes Antreiben bzw. Hinaufziehen des Kolbens 20 der herrschende Druck erniedrigt werden, wodurch im Schmiermittel gelöstes Schmiermittelschutzgas in die Gasphase überführt werden kann. Diese somit bereitgestellte steuerbare Druckbeaufschlagung kann mittels geeigneter Einstellung der Temperatur (mittels nicht dargestellter Heizmittel) unterstützt werden.

Es sind ferner Sensoren 25, 26 vorgesehen, mit denen z. B. in dem Reibpartneraufnahmebereich herrschende Temperaturen und/oder Drücke erfasst werden können. Die erfassten Werte können dann Steuergerät 22a zugeführt werden. Hierdurch kann die Ansteuerung des Antriebs 22 z. B. modifiziert oder verfeinert werden.

Hiermit ist eine sehr effektive Ausnutzung des zugeführten Schmiermittelschutzgases erzielbar. Beispielsweise kann Schmiermittelschutzgas zunächst bei einem relativ hohen Druck im Reibpartneraufnahmebereich 18 in diesen eingeführt werden, wodurch ein relativ großer Anteil des Gases zunächst (relativ kleine) in gelöstem Zustand vorliegt. Hierdurch kann der zunächst gasförmige Anteil als Aerosol bzw. Schmiermittelnebel verwendet werden. Nach einer bestimmten Benutzungszeit kann dieser gasförmige Anteil bzw. das in Gasphase vorliegende Schmiermittelschutzgas seine gewünschten Eigenschaften und somit seine Schutzwirkung verlieren. In diesem Fall kann durch Druckerniedrigung zunächst noch gelöstes Schmiermittelschutzgas in die Gasphase überführt werden, und entsprechend als Aerosol bzw. Schmiermittelnebel eingesetzt werden. Die Notwendigkeit eines kontinuierlichen Durchperlens von Schmiermittelschutzgas durch das Schmiermittelreservoir kann hierdurch vermieden werden, womit ein sehr effektiver Umgang mit Schmiermittelschutzgas zur Verfügung gestellt ist.

Um eine Durchströmbarkeit des Gehäuses 13 mit dem Schmiermittelschutzgas zu ermöglichen, sind, beispielsweise wand- oder deckelseitig des Gehäuses 13, oder auch im Kolben 20 Auslassöffnungen 17 für das Schmiermittelschutzgas vorgesehen, durch die das Schmiermittelschutzgas entweichen kann. Die Auslassöffnungen 17 sind absperrbar und/oder steuerbar ausgebildet, damit einerseits ein möglichst gasdichtes System bereitgestellt werden kann, andererseits aber auch ein konstanter und/oder intermittierender Schmiermittelschutzgasdurchsatz möglich ist.

### Bezugszeichenliste

- 10: zu schmierende Einrichtung
- 11: Reibpartner
- 12: Reibpartner
- 13: Gehäuse
- 14: Schmiermittelreservoir
- 14a: Boden
- 15: Einperleinrichtung
- 16: Zuleitungen
- 17: Auslassöffnungen
- 18: Reibpartneraufnahmebereich
- 20: Kolben
- 22: Antrieb
- 22a: Steuergerät
- 25, 26: Sensoren
- M1: Motor
- M2: Motor

## Patentansprüche

1. Einrichtung (10) mit wenigstens zwei zu schmierenden Reibpartnern (11, 12) und wenigstens einem in der Einrichtung angeordneten Schmiermittelreservoir (14) für ein Schmiermittel, mit wenigstens einer Schmiermittelschutzanordnung, die Mittel (15, 16) zur Versorgung des Schmiermittels in dem Schmiermittelreservoir (14) sowie der Einrichtung (10) mit einem Schmiermittelschutzgas aufweist,
**gekennzeichnet, durch**
eine Druckbeaufschlagungseinrichtung (24) zur steuerbaren Druckbeaufschlagung des Schmiermittels in dem Schmiermittelreservoir (14) und/oder einem Reibpartneraufnahmebereiche (18) der Einrichtung (10), in dem die Reibpartner vorgesehen sind.

2. Einrichtung (10) nach Anspruch 1, **dadurch gekennzeichnet, dass** die Druckbeaufschlagungseinrichtung einen Kolben (20) aufweist, wobei das Volumen des Schmiermittelreservoirs (14) und/oder des Reibpartneraufnahmebereichs (18) mittels Bewegung des Kolbens (20) zur Erhöhung oder Erniedrigung des herrschenden Druckes verkleinerbar bzw. vergrößerbar ist.

3. Einrichtung (10) nach einem der Ansprüche 1 oder 2, **dadurch gekennzeichnet, dass** in dem Schmiermittelreservoir (14) und/oder dem Reibpartneraufnahmebereich wenigstens ein Temperatursensor und/oder wenigstens ein Drucksensor (15, 26) ausgebildet ist.

4. Einrichtung (10) nach einem der vorstehenden Ansprüche, **dadurch gekennzeichnet, dass** die Schmiermittelschutzanordnung Mittel (15, 16) zum Durchströmen des Schmiermittels in dem Schmiermittelreservoir (14) sowie der Einrichtung (10) mit einem Schmiermittelschutzgas aufweist.

5. Einrichtung (10) nach einem der vorstehenden Ansprüche, bei der die Mittel (15, 16) zum Beaufschlagen des Schmiermittelreservoirs (14) sowie der Einrichtung (10) mit dem Schmiermittelschutzgas zumindest eine Zuleitung (16) für das Schmiermittelschutzgas und eine Einperleinrichtung (15) zum Einperlen des Schmiermittelschutzgases in das Schmiermittelreservoir (14) umfassen.

6. Einrichtung (10) nach Anspruch 4 oder 5, die Auslassöffnungen (17) für das Schmiermittelschutzgas aufweist.

7. Einrichtung (10) nach einem der vorstehenden Ansprüche, die eine Heizeinrichtung für das Schmiermittelschutzgas und/oder das Schmiermittel (14) aufweist.

8. Verfahren zum Schmieren einer Einrichtung (10) nach einem der vorstehenden Ansprüche, bei dem mittels einer Schmiermittelschutzanordnung das Schmiermittel mit einem Schmiermittelschutzgas versorgt wird, wobei der auf das Schmiermittel wirkende Druck zur Variation des Verhältnisses von in dem Schmiermittel in gelöstem Zustand vorliegenden Schmiermittelschutzgas zu tief in gasförmiger Phase vorliegenden Schmiermittelschutzgas steuerbar ist.

9. Verfahren nach Anspruch 8, bei dem als Schmiermittelschutzgas Argon, Stickstoff, Kohlendioxid, Kohlenmonoxid und/oder Acetylen oder eine Mischung wenigstens zweier dieser Gase verwendet wird.

10. Verfahren nach einem der Ansprüche 8 oder 9, bei dem als Schmiermittel ein Mineralöl, insbesondere mit Polymerzusätzen und/oder Additiven, verwendet wird.

11. Verfahren nach einem der Ansprüche 8 bis 10, bei dem eine Temperatur, eine Viskosität, eine Dichte und/oder eine Komprimierbarkeit des Schmiermittels und/oder des Schmiermittelschutzgases eingestellt wird.
